# EUROPEAN PATENT APPLICATION

(11) **EP 3 730 982 A1**
(43) Date of publication of application: **28.10.2020**
(21) Application number: 19171213.2
(22) Date of filing: 25.04.2019
(51) Int. Cl.: G02B 6/38

(54) **CONNECTING DEVICE FOR FIBER OPTICS**

(71) Applicant: DoseVue NV, 3590 Diepenbeek (BE)
(72) Inventor: D'Agostino, Emiliano, 3590 Diepenbeek (BE); Plesu, Adrian, 3590 Diepenbeek (BE)
(74) Representative: Brantsandpatents bvba

(57) **Abstract**

The current invention concerns a hermaphroditic device (1) for connecting axially aligned elements, suitable for connecting fiber optics, comprising a body (3), a axially aligned protruding external screw threaded cylinder (2) at one axial end and a sunken axially aligned annular cavity (4) at the other axial end.

## Description

### TECHNICAL FIELD

The present invention relates to a device for connecting axially aligned elements and, in particular provides a hermaphroditic device for connecting axially aligned elements, suitable for connecting fiber optics.

### BACKGROUND

Cable connections are commonly seen in the industry for the purpose of power and information transmission. In the last century, optical fibers, which are used as a means to transmit light between the two ends of the fiber and find wide usage in fiber-optic communications, are greatly developed and widely used in industry. They allow transmission over longer distances and at higher bandwidths (data rates) than electrical cables. Fibers are also used for illumination and imaging, and are often wrapped in bundles so they may be used to carry light into, or images out of confined spaces, as in the case of a fiberscope. Specially designed fibers are also used for a variety of other applications, some of them being fiber optic sensors and fiber lasers.

For instance, radiation dosimetry deals with methods for quantitative determination of energy deposited in a given medium directly or indirectly by ionizing radiations. Optical fibers offer a solution for in vivo radiotherapy dosimetry with many advantages over currently employed clinical dosimetry systems. An optical fiber radiation dosimeter is a photonic system based on optical fiber technology, whereby radiation introduces a modification or modulation in some of the characteristics of the optical signal. The optical fibers can be directly affected by the radiation, in which case it is called an intrinsic sensor, or it can be used for the sole purpose of transmitting the optical signal, and is known as an extrinsic sensor.

As widely used as optical fibers, an optical fiber connector is naturally desired. The mechanism of an optical fiber connector assembly precisely interconnects two optical fiber end surfaces that need to be connected, so that photon energy output by a transmit optical fiber can be coupled to a receive optical fiber to an utmost extent.

The first widely used connector in the data world, at least in North America, was the Snap and Twist (ST). Nowadays, one of the widely used optical fiber connector or connecting meanings is a subminiature assembly (or SMA), designed by Amphenol in CT (computed tomography) as a variation of their coaxial electrical connect. A couple of disadvantages could, however, still be drawn: it is not friendly to terminate in the field; if connectors are not polished within the long side of the length tolerance, one could crash another connector (damage the glass and the polish) or worse, a device like an LED, laser or detector; the polishing process itself is markedly different from those of standard communications connectors, and therefore requires some different procedures, tools and films, in order to produce acceptable assemblies.

A first challenge for a connector is the reliability. EP 3214471 discloses an optical fiber connector with one end fastened to the flat drop cable and a thread connection with hook grooves at the other end.

Moreover, though great attention has been drawn on minimizing the effort on assembling the connector onsite, it often still requires certain operation. There are many instances where it would be desirable to be able to magnetically connect both electrical conductors and optical waveguides in a coaxial cable. As disclosed in CA 2320684, using an O-ring sleeve to magnetically connect two coaxial cable greatly improves the operational ease.

Furthermore, the positioning of a connector is often neglected, as it normally lies with (or in between) the cables without a specific fixed manner. As such it might cause unnecessary movements of cables since it is normally heavier than a cable in terms of weight per unit.

Current gap for designing a device for connecting axially aligned elements is that it should i) offer a reliable connection; ii) minimize the effort to assemble cables in the connector; iii) offer a secured solution to fix the connector as not weltering the cables and further mulling the operation environment.

### SUMMARY OF THE INVENTION

In a first aspect, the invention provides a hermaphroditic device for connecting axially aligned elements, suitable for connecting fiber optics, in a subject in need thereof, the device comprising:
- a body;
- a axially aligned protruding external screw threaded cylinder at one axial end;
- a sunken axially aligned annular cavity at the other axial end.

The inventors have thus realized a device which is suitable for connecting two fiber optics, wherein one end is connected with screw thread and the other end is pluggable, which improves the operation effectivity in use. Furthermore, said device is suitable to be fastened onto a fixed position using magnetic force.

In a second aspect, the present invention provides a kit for assembling a monitoring system for the matter of in-vivo dosimeter in radiotherapy, in a subject in need thereof, the kit comprising:
- a monitoring device for receiving and analysing the radiation data from the end tips of fiber optics;
- a plurality of said connecting devices;
- a plurality of in-vivo dosimeters applied in a subject;
- a plurality of pre-protected optical extensions linking the said monitoring device and said connecting device;
- a plurality of fiber optics linking the said connecting device sand said dosimeter.

### DESCRIPTION OF FlGURES

**Fig. 1A** shows schematically a perspective view of the device when all components are assembled. **Fig. 1B** shows schematically a perspective view of the device when the ring cylindered sleeve is separated from the body along the axially centerline.
**Fig. 2A** shows schematically a perspective view of the device of Fig. 1A from a topical view of the pluggable port end. **Fig. 2B** shows schematically a perspective view of the device of Fig. 1A from a topical view of the front. **Fig. 2C** shows schematically a perspective view of the device of Fig. 1A from a topical view of the protruding end.
**Fig. 3** shows schematically a perspective view of the device of Fig. 1A from a cross-section view marked in Fig. 2A (A-A).
**Fig. 4A** shows schematically a perspective view of the device of Fig. 1A and two ends (or fiber collectors) need to be connected. **Fig. 4B** shows schematically a perspective view of said device and ends in connected state.

### DETAILED DESCRIPTION OF THE INVENTION

The present invention concerns a connecting device suitable for fiber optics in radiotherapy.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

### Device for connecting axially aligned elements

In a first aspect, the invention provides a hermaphroditic device for connecting axially aligned elements, suitable for connecting fiber optics, in a subject in need thereof, the device comprising:
- a body;
- a axially aligned protruding external screw threaded cylinder at one axial end;
- a sunken axially aligned annular cavity at the other axial end.

The inventors have thus realized a device which is suitable for connecting two fiber optics, wherein one end is connected with screw thread and the other end is pluggable, which improves the operation effectivity in use. Furthermore, said device is suitable to be fastened onto a fixed position using magnetic force.

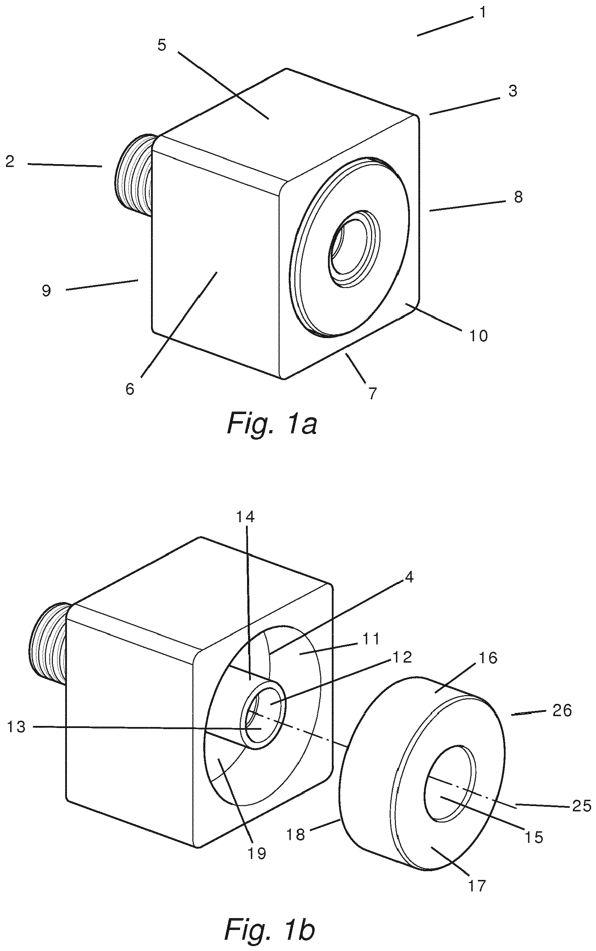

In a preferred embodiment (Fig. 1A), the present invention provides a connector (1) according to the first aspects of the invention, comprising a body (3), a axially aligned protruding cylinder (2) at one axial end, a sunken axially aligned annular cavity (4) at the other axial end.

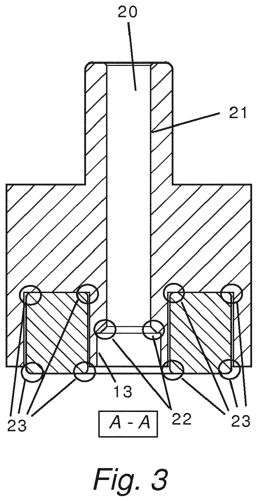

In a preferred embodiment, the body (3) is a cubic shape and the outer surface (10) that is orthogonal to the centerline (25) is a square. Four outer surface (5, 6, 7, 8) of the body (3) are flat and magnetized. As shown in Fig. 1B, the sunken cavity (4) further comprises a ring cylindered sleeve (26) and a paired thin wall sleeve (12) that matches the inner surface (15) of said ring cylindered sleeve (26). When assembled (Fig. 1A, Fig. 3), the inner flat surface (19) of said cavity (4) directly contacts the outer flat surface (18) of said ring sleeve (26). The same applies to the inner ring surface (11) of said cavity (4) and outer ring surface (16) of said ring sleeve (26). The same also applies to the outer surface (14) of said thin wall sleeve (12) and the inner surface (15) of said ring cylindered sleeve (26). It requires all mentioned surfaces in said cavity (4) and said ring cylindered sleeve (26) to be smooth. The sunken annular cavity (4) is, in a subject of matters , to serve as a pluggable port using magnetic force. Thus the inner surface (13) of said thin wall sleeve (12) is magnetized, by the fact that a magnet is glued in the annular cavity (not shown in Fig. 1B).

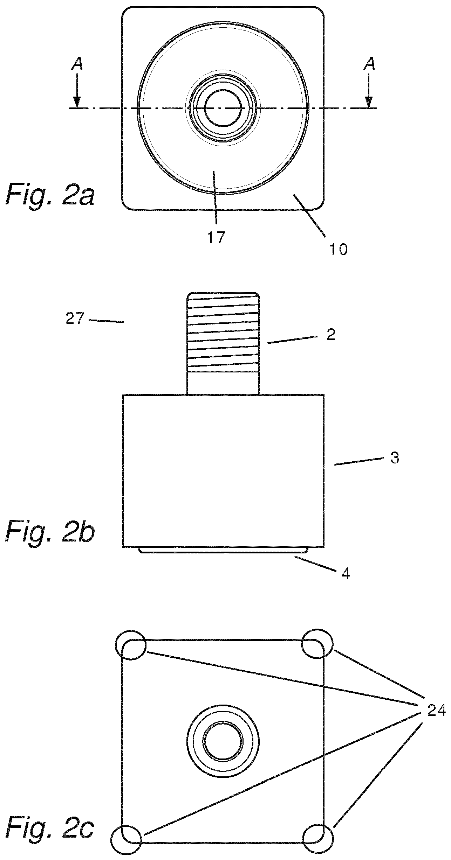

In a preferred embodiment, the body (3) is solid integrated with a axially aligned protruding cylinder (2), which comprises a SMA-905 screw thread (27) on the outer surface (Fig. 2B). Said protruding cylinder (2) comprises a cylindrical hollow (20) inside that also requires a smooth surface (21). Said inner surface (21) of said cylindrical hollow (20) is of different diameters to the inner surface (13) of said thin wall sleeve (12). Said inner surfaces (21 and 13) are connected using a trapezoidal table, making the connector (1) is hollow along the centreline (25) from one end to the other. Thus it leaves the space for two fiber optics to be connected inside the connector (1).

In a preferred embodiment, the edges (24) of said body (3) and the edges (23) of said ring cylindered sleeve (26) are rounded to be hand-touch friendly and further benefiting the operation process when in use.

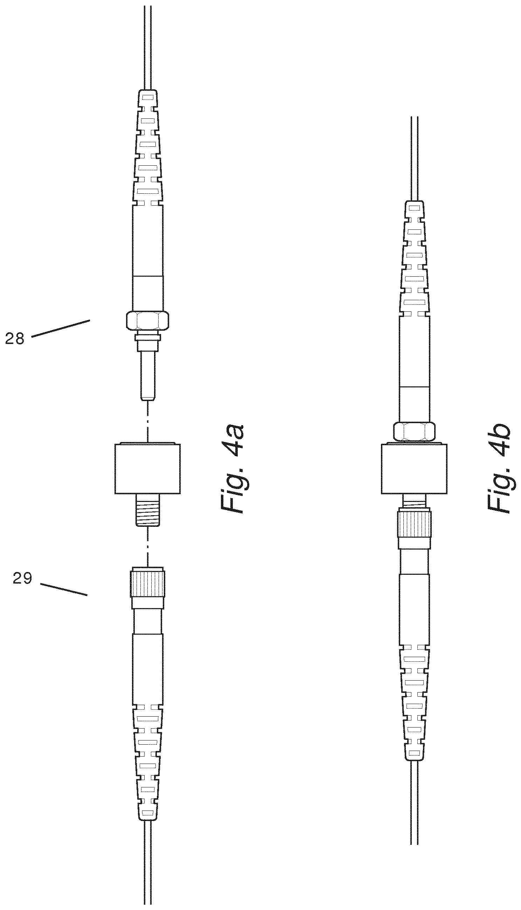

In a preferred embodiment, the axially aligned protruding cylinder (2) is connected with a paired inner-screw-threaded fiber optic collector (29), as shown in Fig. 4a. The inner screw thread is coupling with the outer screw thread on the surface of said protruding cylinder (2). As further shown in Fig. 4a, the sunken annular cavity (4) is connected with a paired pluggable fiber optic collector (28). When in use, the outer surface of said collector (28) is fastened onto the inner surface (13) of the thin wall sleeve (12) by magnetic force.

The phrase "hermaphroditic" used in this invention only refers to the fact that said connector (1) contains a axially aligned protruding end (2) and a cavity end (4). It however, does not imply that the protruding end (2) could match the cavity end (4) nor using the same coupling at both ends (i.e. protruding end (2) of a connector (1) cannot be inserted to the cavity end (4) of another same connector). In present invention, said two ends (2 and 4) need to couple with different fiber optic collectors (28 and 29), as shown in Fig. 4.

One practical application of present invention in a preferred embodiment is in radiotherapy. Typically a monitoring device is positioned outside the sterile surgery room, an optical extension (e.g. 10m) is linking the monitoring device and the near of surgery table. As fiber cables are pricy, especially a long one such as an optical extension. A pre-protection is usually applied to said optical extension, such as plastic coating. The optical extension is usually fixed to avoid disturbance during the radiotherapy. On the other hand, in order to apply the dosimeter in possibly anywhere of a subject, the fiber optic (typically 1m) linked to the dosimeter needs to be flexible and easy to apply on a subject. Thus said fiber extension and fiber optic are connected by a connector (1). Typically, the proximal end of fiber extension is integrated in an inner-screw-threaded fiber optic collector (29), and said collector (29) is screwed with said protruding end (2) of said connector (1). Once screwed, the surgeon/nurse can easily fasten said connector (1) on a metaling bed. The proximal end of fiber optic linked to the dosimeter is integrated in a pluggable fiber optic collector (28). The surgeon/nurse can easily plug said collector (28) in the connector (1) with one hand. As the plugging is using magnetic force, it automatically ensures the collector (28) in correct position and securely connected during the treatment.

### Kit for assembling a monitoring system for the matter of in-vivo dosimeter in radiotherapy

In a second aspect, the present invention provides a kit for assembling a monitoring system for the matter of in-vivo dosimeter in radiotherapy, in a subject in need thereof, the kit comprising:
- a monitoring device for receiving and analysing the radiation data from the end tips of fiber optics;
- a plurality of said connecting devices;
- a plurality of in-vivo dosimeters applied in a subject;
- a plurality of optical extensions linking the said monitoring device and said connecting device;
- a plurality of fiber optics linking the said connecting device sand said dosimeters.

A basic working scope of said kit is disclosed in previous paragraphs, in case of a single channel does monitoring in radiotherapy. When multiple monitoring channels are needed during a radiotherapy, a plurality of a connector (1) according to the first aspects of the invention are needed. In a preferred embodiment, a monitoring device can host up to 4 channels, which requires 4 sets of an optical extension (integrated with a collector), a connector (1), a fiber optic (integrated with a collector) and a dosimeter. The surface (5, 6, 7, 8)of said connector (1) is magnetized, thus the connectors could be fastened to each other and onto the metaling bed. An alternative is to build a housing that can host a plurality of said connector (1), wherein said housing is fastened onto a metaling bed. Such that a plurality of optical cables are organized in order and will not cause a mess, and the collected dose information are easy to categorize.

In cases that more than 4 channels need to be applied during a radiotherapy, a monitoring device with more channels could be applied. Alternatively, a plurality of current monitoring device could be applied, with a careful calibration between different monitoring devices. The fiber cables and connectors could be applied same as above.

Preferably, said kit is configured for using a device according to the first aspect of the invention.

Using the preferred embodiments disclosed in this document to summarize the advantages of current invention in first aspect - the connector and in second aspect -the kit (the monitoring system), it is that, in a radiotherapy, i) a monitoring system offers a reliable connection for data obtaining; ii) the fiber optics is organized in order and not disturb the surgery operation; iii) the optical extension stays fixed and is not forced to reach the desired location; iv) the connector keeps the optical extension fixed to the near of surgery table, and the connector can be fastened in any suitable location on the metaling surgery bed; v) the plug-in operation of the fiber optic linking the dosimeter is a single hand movement; vi) the fiber optic linking the dosimeter is flexible and adaptable for anywhere in a subject; vii) the fiber optic linking the dosimeter is replaceable in case of need; viii) it is possible to apply multiple channels without interfering the operation environment or adding extra work for the surgeon/nurse.

It has to be noted that the preferred embodiment nevertheless is used to disclosed the present invention, it however, never restricts the scope of the invention, including but not restrict to: the using situations, the shape and material of the connecting device, the collectors paired with the connecting device, etc.

### EXAMPLE

A preferred embodiment of the present invention is presented below. It is however clear that other embodiments can easily be contemplated within the scope of the invention. The presentation below should thus not be construed restrictive, but it should be realized that the skilled person will easily apply modifications to the presented example without reappraisal of the appended claims.

### EXAMPLE 1

During Intra Operative Radiation Therapy (IORT) it is important to be able to perform real-time dosimetry in order to assess the dose really delivered to the patient and/or the remaining dose absorbed by the stopper after the treatment. Due to the particular conditions of this type of treatment, i.e. such treatment requires to be in sterile conditions in a surgery room. In most instances, during such therapy, multiple processes are under operation, which leaves no special care available for the use of devices. Thus, for the sake of stable data transfer and operation efficiency, it is fundamental to be able to manipulate the radiation detectors is a secured and easy manner.

In current system, the monitoring device is often put outside the surgery room. A rather long optical extension is linking the monitoring device to the near of surgery table. Surgeons and/or nurses will first need to connect a typically 1m long fiber sensor to the optical extension, and second apply the fiber sensor to the patient. This connecting system i) ensures the flexibility of applying the 1m fiber sensor to the patient as the treatment requires; ii) protects the long optical extension from being damaged during the treatment due to the rather busy operation process. In currently commercially available connector systems (e.g. ST connectors), it is necessary to connect the fiber sensor (1m) to the optical extension, using both ends acting on a bayonet-like connection system (e.g. SMA). Furthermore, it is also necessary to tape the connector to the surgery table in order to avoid that the fiber sensor would move, once in the patient.

In a preferred embodiment, a kit of optical fiber based detectors comprising a monitoring device, a typically 10m long optical extension, an outer screwed fiber collector, and terminated by a magnetic connector. The connector has a magnetic outer surface, which allows it to be fastened to a metaling surgery table.

When ready for the irradiation, the surgeon/nurse, plugs the typically 1m long radiation sensor (in-vivo dosimeter) on the available end of the connecting device and applies the other end of the 1m long radiation sensor to the patient.
The connector end of the 1m long fiber is plugged in the magnetic connector. The strength of the local magnetic field in the connector will automatically make sure that the fiber sensor is brought in the right position, and secure the connection stable in order to follow radiation in real-time.

This simple operation can be executed with one hand and, as a result of the design of the magnetic connector, an extremely reproducible coupling is obtained. Moreover, the connector itself is fastened in a metaling surgery bed by magnetic force, leaves the cables around the surgery bed orderly.

In situations that more sensors need to be applied to a patient, it is also possible to have a plurality of above said kit. Current monitoring device is able to host maximum four fiber optics which requires up to four connectors to be fastened on the metaling bed. It is first possible to position the four connectors in a housing box fastened/integrated in the metaling bed, collecting all the connectors in one position and not disturbing the surgery table. Secondly, in a more preferred embodiment, the surfaces of the connector are all magnetized, which allows them to be fastened not only to the metaling bed but also to other connectors using magnetic force. It has to be noted that above situation also applies to two and three connecters. When more than four fiber sensors are needed in a therapy, adding more said monitoring device and said kit would serve the purpose, when the synchronization between monitoring devices is being attentively taken care of.

## Claims

1. A hermaphroditic device for connecting axially aligned elements, suitable for connecting fiber optics, comprising a body, a axially aligned protruding external screw threaded cylinder at one axial end and a sunken axially aligned annular cavity at the other axial end.

2. A device according to claim 1 wherein the sunken axially aligned annular cavity comprises a ring cylindered sleeve forming a pluggable port.

3. A device according to claim 1 or 2 wherein, wherein at least one surface of said device is magnetic.

4. A device according to any of the previous claims 1-3, wherein at least one outer surface of the body is flat and/or magnetic.

5. A device according to any of the previous claims 1-4, wherein said protruding end is solid integrated with said body.

6. A device according to any of the previous claims 1-5, wherein said body comprises an integrated thin wall sleeve matched with the inner surface of said ring cylindered sleeve.

7. A device according to any of the previous claims 1-6, wherein the cross section orthogonal to the axial centreline of said body is a square.

8. A device according to, to any of the previous claims 1-7, wherein said body is of a cubic shape.

9. A device according to, to any of the previous claims 1-8 wherein said body comprises an inner and outer surface.

10. A device according to claim 9, wherein the outer surface of said body is magnetic.

11. A device according to claim 9 or 10, wherein the opposite two outer surfaces are with opposite magnetic poles.

12. A device according to any of the previous claims 1-11, wherein the inner surface of the pluggable port end is magnetic.

13. A device according to any of the previous claims 1-12, whereby two fiber optics are interconnected and whereby one fiber optic is connected with a monitoring device for radiation data analysing and the other fiber optic is connected with an in-vivo dosimeter.

14. A plurality of device according to any of the previous claims 1-13 which are magnetically grouped.

15. A kit for assembling a monitoring system for the matter of in-vivo dosimeter in radiotherapy, comprising: a monitoring device for receiving and analysing the radiation data from the end tips of fiber optics, a plurality of said connecting devices according to any of the claims 1-13, a plurality of in-vivo dosimeters applied in a subject, a plurality of pre-protected optical extensions linking said monitoring device and said connecting device, a plurality of fiber optics linking the said connecting device and said dosimeter.
